# EUROPÄISCHE PATENTSCHRIFT

(11) **EP 0 951 574 B1**
(45) Veröffentlichungstag und Bekanntmachung des Hinweises auf die Patenterteilung: **28.11.2001**
(21) Anmeldenummer: 98901954.2
(22) Anmeldetag: 09.01.1998
(51) Int. Cl.: C22C 47/00, C22C 1/10, B22F 7/02

(54) **METALL-KERAMISCHES KONSTRUKTIONSELEMENT - SEIN AUFBAU UND SEINE HERSTELLUNG**
CERMET STRUCTURAL ELEMENT, ITS CONSTRUCTION AND PRODUCTION
ELEMENT DE CONSTRUCTION EN CERMET, SA STRUCTURE ET SON PROCEDE DE PRODUCTION

(30) Priorität: 10.01.1997 DE 19700631; 06.06.1997 DE 19723929; 14.11.1997 DE 19750599
(43) Veröffentlichungstag der Anmeldung: 27.10.1999
(73) Patentinhaber: CLAUSSEN, Nils, D-21224 Rosengarten (DE)
(72) Erfinder: CLAUSSEN, Nils, D-21224 Rosengarten (DE); JANSSEN, Rolf, D-21075 Hamburg (DE); WAGNER, Florian, D-20535 Hamburg (DE)
(74) Vertreter: Huber, Bernhard, Dipl.-Chem.
(86) Internationale Anmeldenummer: EP9800102
(87) Internationale Veröffentlichungsnummer: WO9830725

(56) Entgegenhaltungen:
- EP-A- 0 335 692
- EP-A- 0 496 935
- EP-A- 0 790 223
- DE-A- 4 447 130
- JOM, Band 43, Nr. 4, April 1991, ROHATGI PRADEEP, "CAST ALUMINUM-MATRIX COMPOSITES FOR AUTOMOTIVE APPLICATIONS", XP002900152

## Beschreibung

Oberflächlich besonders belastete Konstruktionsteile sind im allgemeinen Teile, deren Oberflächen mechanisch gegeneinander bewegt werden, z.B. Lager, Dichtungen und Bremselemente oder Teile, deren Oberflächen besonderen Temperatur- oder Korrosionsbelastungen ausgesetzt sind. In vielen Anwendungen werden Stahl oder für Hochleistungsanwendungen, wie Rennwagen, auch Kohlenstoff-faserverstärkte Kohlenstoffe verwendet. Als vorteilhafte Werkstoffe sind für diese Anwendungen Aluminium-infiltrierte SiC- und Al₂O₃-Werkstoffe (PRIMEX) sowie reaktionsgeformte Al₂O₃-Al-Komponenten (DIMOX) bekannt. Derartige Werkstoffe sind beschrieben in der DE 44 47 130 A1 und der darin zitierten Literatur sowie in der Anmeldung DE 196 05 858.

Derartige Materialien, die z.B. zum Einsatz bei tribologischen Konstruktionsteilen bestimmt sind, sollten leicht, korrosions- und oxidationsbeständig sowie verschleißfest sein und möglichst eine temperaturunabhängige Reibzahl besitzen. Insbesondere bei Hochleistungsbremselementen ist eine hohe Temperaturbeständigkeit wichtig. Keiner der bekannten Metall-keramischen Werkstoffe genügt aber den steigenden Anforderungen, wie sie beispielsweise bei Bremselementen von Hochgeschwindigkeitszügen oder im Flugzeugbau erwünscht wären.

Auch die verbesserten Werkstoffe PRIMEX und DIMOX weisen als entscheidenden Nachteil einen geringen Schmelzpunkt der Al-Phase (660°C) sowie eine starke tribomechanische Eigenschaftsveränderung bei Temperaturen > 300°C auf, die bei längeren Bremsvorgängen schnell überschritten werden.

In der deutschen Patentanmeldung 1960858.9 ist ein reaktionsgeformter Werkstoff beschrieben, bei dem die tribomechanischen und tribochemischen Eigenschaften verbessert wurden, jedoch ist ein Einsatz als Hochieistungsbremselement aufgrund der geringen Bruchzähigkeit und Bruchfestigkeit des gesamten tragenden Teils problematisch. Dasselbe trifft zu für einen durch langsamen Reaktionspressguss hergestellten Verbundwerkstoff, der in den japanischen Anmeldungen JP 06192767 und 08143990A sowie in J.Mat.Sci.Let. 9 (1990), 23 beschrieben ist. Hier wurde Al in einem aus TiO₂-Whiskern bestehenden Vorkörper bei T > 800°C infiltriert. Dabei entstand ein inhomogenes, von Rissen durchzogenes und nur teilweise reagiertes Gefüge, das auch nach einstündigem Glühen bei 800°C nicht umgesetzt (durchreagiert) werden konnte. Auch in diesem Fall dürfte ein Einsatz als Triboelement nicht möglich sein.

Aufgabe der Erfindung ist es deshalb, ein Metall-keramisches Konstruktionselement bereitzustellen, das die Nachteile der bekannten, besonders tribologisch beanspruchten, Metall-keramischen Konstruktionsteile nicht oder nur in wesentlich geringerem Maße aufweist.

Gelöst wird diese Aufgabe erfindungsgemäß durch ein Verfahren zur Herstellung eines Metall-keramischen Konstruktionselements, in dem man in einer Druck- oder Pressguss-Vorrichtung in einen offenporigen keramischen Vorkörper (Precursor), der die poröse Vorform mindestens der Oberflächenschicht aufweist und mindestens eine von Al reduzierbare oxidische Verbindung mit auf den dichten Werkstoff bezogenen Volumenanteilen von 10 bis 100 % und Al₂O₃ mit 0 bis 90 % sowie gegebenenfalls weitere nichtoxidische Verbindungen oder Elemente sowie gegebenenfalls metallische Verstärkungselemente enthält und der gegebenenfalls mit einem Träger verbunden ist, flüssiges Al oder Al-Legierung einpresst, wobei die oxidische Verbindung Beschleuniger in Form eines exotherm stärker aktiven Oxids, ausgewählt aus FeO, Fe₂O₃, Fe₃O₄, NiO oder MoO₃ oder Gemischen derselben in einer Menge von 10 bis 50 Vol.-%, bezogen auf die von Al reduzierbare oxidische Verbindung enthält und die Reaktion zwischen Al und dem Metalloxid in das entsprechende Aluminid und Al₂O₃ bewirkt, bis sich mindestens eine Al₂O₃-haltige Oberflächenschicht, die von einer vorwiegend aus Aluminiden bestehenden Al-Phase durchzogen ist, und gegebenenfalls eine oder mehrere damit verbundene Übergangsschichten bildet.

Der hier gewählte Ausdruck "Oberflächenschicht" umfasst nicht nur dünne planare Schichten, sondern Schichten jeglicher Geometrie, d.h. z.B. auch den inneren oder äußeren Bereich eines Hohlzylinders, mit Schichtdicken bis zu etwa 30 mm) und gegebenenfalls eine oder mehrere damit verbundene Übergangsschichten und gegebenenfalls einen damit verbundenen Träger.

Die Nachteile, die bei den bekannten Metall-keramischen Konstruktionselementen vorhanden sind, werden dadurch beseitigt, dass das erfindungsgemäß erhaltene Konstruktionselement auf seiner Oberfläche im wesentlichen Aluminide beinhaltet. Aluminide sind intermetallische Al-Verbindungen. Es wurde überraschenderweise festgestellt, dass der Aufbau des erfindungsgemäß erhaltenen Metall-keramischen Konstruktionselements zu hoher Temperaturbeständigkeit führt und das Metall-keramische Konstruktionselement eine relativ temperaturunabhängige Reibzahl aufweist. Ein weiterer Vorteil ist sein geringes Gewicht sowie seine hohe Oxidationsstabilität.

Der Anteil des Al₂O₃ in der Keramikschicht wird den jeweiligen Anforderungen an das Metall-keramische Konstruktionselement angepasst. Vorzugsweise enthält die Keramikschicht 10 bis 90 Vol.-% Al₂O₃, besonders bevorzugt 30 bis 70 Vol.- % Al₂O₃. Die metallische Al-Phase, die das Metall-keramische Konstruktionselement durchzieht, kann variieren. Vorzugsweise hat sie einen Anteil von 10 bis 90 Vol.-%, besonders bevorzugt 30 bis 70 Vol.-%. Das Al kann teilweise durch Mg ersetzt sein.

Die Dicke der Oberflächenschicht, die neben Al₂O₃ eine im wesentlichen als Aluminid vorliegende metallische Al-Phase beinhaltet, kann je nach den Anforderungen unterschiedlich sein, vorzugsweise hat sie eine Dicke von 0,2 bis 30 mm. Besonders bevorzugt hat sie eine Dicke von 1 bis 15 mm. Die Oberflächenschicht kann neben Al₂O₃ und Aluminiden noch zusätzlich Al oder Al-Legierung enthalten; besonders dann, wenn eine erhöhte thermische und elektrische Leitfähigkeit gefordert wird.

In einer besonderen Ausführungsform kann das Metall-keramische Konstruktionselement in seiner Oberflächenschicht Verstärkungs- oder/und Funktionselemente in Form von Kugeln, Plättchen, Whiskern oder/und Fasern enthalten.

Der Anteil an Verstärkungs- oder/und Funktionselementen in dem Metall-keramischen Konstruktionselement richtet sich nach den gewünschten Materialeigenschaften, vorzugsweise beträgt er 5 bis 50 Vol.-%. Bevorzugt bestehen die Verstärkungs- oder/und Funktionselemente aus Oxiden, Carbiden, Nitriden, Boriden oder/und Siliciden. In einer weiteren bevorzugten Ausführungsform können Kohlenstoff, Diamant, SiC, Si₃N₄, TiC, WC oder/und ZrO₂ verwendet werden.

In einer besonders bevorzugten Ausführungsform enthalten die Verstärkungs- oder/und Funktionselemente beschichtete oder unbeschichtete SiC, SiCB, SiCBN, Si₃N₄, Al₂O₃ oder/und Mullitfasern oder bestehen daraus.

In einer weiteren bevorzugten Ausführungsform enthält das Konstruktionselement metallische Verstärkungselemente in Form von Drähten oder Rovings oder Drahtgeweben, -gestricken oder -wolle, die entweder nur die Oberflächenschicht oder auch Teile oder auch das ganze Bauteil durchziehen. Die metallischen Verstärkungselemente machen 5 bis 60 Vol.-% aus und können aus den folgenden Metallen oder ihren Legierungen oder intermetallischen Verbindungen bestehen: Al, Cu, Cr, Fe, Ni, Co, Si, Ti, Nd, Hf, Mo, V, W, Zr. Diese bevorzugt aus Stahl oder aus aushärtbarem Stahl bestehenden Verstärkungselemente werden beim Druckguss (die pressure casting) nicht oder nur unwesentlich oberflächlich angelöst (was die Haftung zur Al₂O₃/Aluminid-Phase nur verbessern kann), sodass sie nicht nur in der Lage sind, die grüne (ungesinterte) Vorform zu stabilisieren, sondern auch nach der Reaktionsinfiltration den Körper bzw. die Oberflächenschicht entscheidend bruchzäher zu machen. Bei kurzen Druckgusszeiten können sogar Aluminiumdrähte, besonders hochfeste Al-Legierungsdrähte, im Teil erhalten bleiben und wesentlich zur Verstärkung beitragen. Beim konventionellen Pressguss (squeeze casting) oder bei der Gasdruckinfiltration, die längere Infiltrationsdauern bei Temperaturen über dem Al-Schmelzpunkt bedeuten, werden die Drähte ganz oder teilweise aufgelöst. Eine weitere Möglichkeit, der reagierten Oberflächenschicht mehr Bruchzähigkeit zu verleihen und eventuell besser mit dem Träger zu verbinden, besteht darin, dass der grüne Precursor (z.B. durch Thermolyse) entfernbares faserförmiges Material, wie etwa eine ausbrennbare oder ausdampfbare Filz- oder Gewebeeinlage, beispielsweise aus Textil oder Kunststoff enthält, das bei der Vorsinterung des Precursors verschwindet und ein entsprechendes offenes Kanalsystem (die Negativform der Einlage) hinterlässt, welches bei der späteren Druckinfiltration mit Al oder Al-Legierung gefüllt wird.

Die Bestandteile des Metall-keramischen Konstruktionselements sind entweder gleichmäßig in der Schicht verteilt, oder das Metall-keramische Konstruktionselement ist graduiert aus Schichten aufgebaut. Insbesondere kann ein Gradient im Volumentanteil von Al₂O₃ oder/und der Aluminide zu vorteilhaften Materialeigenschaften des Metall-keramischen Konstruktionselements führen und beispielsweise ein Ausgleichen von unterschiedlichen thermischen Ausdehnungskoeffizienten ermöglichen.

Die metallische Phase, die die Oberflächenschicht durchzieht, umfasst im Wesentlichen ein oder mehrere Aluminide und gegebenenfalls Aluminium bzw. Al-Legierung. In einer bevorzugten Ausführungsform kann das Aluminid eine Verbindung aus Al und wenigstens einem der Metalle Fe, Ni, Nb, Zr, Ti, Co, Mo, W, V oder eine Mischung solcher Aluminide sein.

Das Metall-keramische Konstruktionselement besteht normalerweise aus mindestens einer Schicht. Es kann aber auch aus mehreren unterschiedlichen Schichten aufgebaut werden.

In einer weiteren Ausführungsform wird das Metall-keramische Konstruktionselement mit einer oder mehreren weiteren Schichten verbunden. Diese weiteren Schichten können aus unterschiedlichen Materialien aufgebaut sein, vorzugsweise sind sie aus Al₂O₃ und Al sowie Aluminiden aufgebaut. Sie erleichtern den thermomechanisch verträglichen Übergang zum Trägerelement, das die mechanische Verbindung zum Gerät, Maschine, Scheibenbremstopf, Bremstrommel, Fahrzeug etc. bildet. Das Trägerelement besteht bevorzugt aus Al oder Al-Legierung und hat neben der thermomechanischen Verbindungsfunktion auch die Aufgabe, das Metall-keramische Konstruktionselement zu verstärken, indem es es beispielsweise umspannt (siehe dazu Ausführungstypen III und IV).

Für den Fall, dass der grüne Vorkörper ein metallisches Stützgewebe oder Verstärkungselemente enthält, wird die Oberflächenschicht und gegebenenfalls auch die weiteren Schichten und der Träger von einer zusätzlichen metallischen Phase durchzogen.

Der Precursor kann durch verschiedene keramische Formgebungsprozesse, wie Tape-Casting, Direct Coagulation Casting, Gel Casting, Slip Casting oder Trockenpressen, in Matrizen hergestellt werden. Danach kann er entweder im Grünzustand oder in vorgesinterter Form in der Druck-, Press- oder Gasdruckform mit Al- oder Al-Legierung infiltriert werden. Wenn ein grüner Precursor verwendet wird, ist es vorteilhaft, die Stabilität (besonders für Druckguss mit hohen Infiltrationsgeschwindigkeiten) entweder durch Zugabe von metallischen Partikeln (z.B. Al oder Aluminid-bildende Metalle) oder organischen (gegebenenfalls aushärtenden) Bindemitteln zu erhöhen. Besonders günstig ist es, metallische Verstärkungselemente etwa in Form von Drähten oder Rovings oder Drahtgeweben, -gestricken oder Drahtwolle oder anderen drahtartigen Gebilden in den Grünkörper einzubauen, was sowohl durch Einrütteln oder - pressen der trockenen keramischen Pulver als auch durch Schlickerinfiltration oder Schlickerpressen erfolgen kann. Auch ist es möglich, das Precursor-Keramikpulver durch eine ein- oder mehrseitig offene oder auch perforierte Stützform aus Metall zu stabilisieren, beispielsweise geschieht dies durch Einpressen des Keramikpulvers in eine solche Form, die anschließend ohne Vorsinterung in die Druckgussform eingesetzt wird. Diese Stützform besteht bevorzugt aus Al der Al-Legierung, kann aber auch aus Stahl oder anderen Metallen bestehen. Im Falle einer Al-Form kann bei langsamer Druckinfiltration eine Auflösung der Form erfolgen. Dies ist jedoch nicht nachteilig, da auch das Trägerelement aus Al besteht. Soll ein Metall-keramisches Konstruktionselement mit einer Graduierung hergestellt werden, so liegt bereits in dem Precursor ein Gradient vor. Beispielsweise kann ein Gradient im Volumentanteil des reaktionsfähigen Metalloxids und Al₂O₃ vorliegen, so dass man nach der Reaktionsinfiltration einen Gradienten mit Keramik und unterschiedlichen Anteilen an Aluminid erhält. Um einen wie oben beschriebenen Schichtaufbau zu erhalten, können mehrere als Lamina hergestellte Grünschichten unterschiedlicher Zusammensetzung aufeinander gelegt werden. Der erhaltene Körper wird ebenfalls mit metallischen Verstärkungselementen oder mit organischen Bindern verfestigt und gegebenenfalls bei Temperaturen zwischen 900°C und 1200°C gesintert. Wenn der poröse Vorkörper nur Oxide enthält, ist eine Sinterung an Luft sinnvoll und bevorzugt. Dadurch werden die Schichten miteinander verbunden. Es ist aber auch möglich, die grünen Schichten in die Gussvorrichtung einzubringen und die Verbindung der Schichten durch den Infiltrationsvorgang mit Al oder Al-Legierungen zu erreichen.

Der Pressgussvorgang kann nach in der Technik gebräuchlichen Methoden, wie etwa Druckguss, Pressguss oder Gasdruckinfiltration durchgeführt werden. Auch eine drucklose Reaktionsinfiltration ist möglich, wenn die notwendigen Benetzungsvoraussetzungen geschaffen sind. Allerdings wird der Druckguss (die pressure casting) das geeignetste Verfahren darstellen.

Die von Al reduzierbaren oxidischen Stoffe enthalten mindestens eine Verbindung aus der Gruppe CaO, Cr₂O₃, CuO, Cu₂O, CoO, Co₂O₃, FeO, Fe₂O₃, Fe₃O₄, HfO₂, Li₂O, MnO, MgO, MoO₃, Na₂O, Nb₂O, Nb₂O₅, NiO, SiO₂, TiO, TiO₂, V₂O₅, WO₃, Y₂O₃, ZrO₂, Mullite, Spinelle, Zirkonate, Titanate sowie Fe-, Ti-, Co-, Ni-, Zr-, Si-, Nb-haltige Erze, insbesondere Zirkon (ZrSiO₄) oder Ilmenit (FeTiO₃). Die reduzierbaren Metalloxide können auch teilweise durch die entsprechenden Metalle (und gegebenenfalls zusätzliches Al₂O₃) ersetzt werden, wenn die exotherme Reaktionswärme reduziert werden soll. Um eine möglichst vollständige Reaktion zu erzielen, werden hier als Beschleuniger bezeichnete, exotherm stärker aktive Oxide, ausgewählt aus FeO, Fe₂O₃, Fe₃O₄, NiO und MoO₃ zugesetzt. Dies ist insbesondere bei Verwendung von weniger exotherm reagierenden Substanzen, wie z.B. TiO₂ oder Nb₂O₅ von Vorteil. Diese Beschleuniger werden in Mengen von 10 bis 50 Vol.-%, bezogen auf die von Al reduzierbare oxidische Verbindung, verwendet. Besonders wenn ein TiO₂-haltiger Vorkörper wenig vorgeheizt und mit niedrigen Al-Temperaturen (weniger als 750°C) reaktionsinfiltriert wird, ist eine Zugabe von ca. 10 bis 50 Vol.-% Fe₂O₃ zweckmäßig.

Der in dem erfindungsgemäßen Verfahren verwendete Precursor kann bei Raumtemperatur in das Verfahren eingesetzt werden, vorzugsweise wird er vorgeheizt, zweckmäßig auf 200°C bis 700°C. Das in dem erfindungsgemäßen Verfahren verwendete Al oder die Al-Legierung wird je nach den Anforderungen bei unterschiedlichen Temperaturen oberhalb ihrer Schmelztemperatur in den Precursor eingepresst, vorzugsweise bei einer Temperatur von 700°C bis 1200°C, besonders bevorzugt bei 700°C bis 900°C.

Der in dem erfindungsgemäßen Verfahren verwendete Druck wird an die anderen Verfahrensbedingungen angepasst. Vorzugsweise wird das Al oder die Al-Legierung mit einem Druck von 1 bis 200 MPa eingepresst. Allerdings kann der Precursor auch ohne äußeren Druck infiltriert werden, wenn das flüssige Al oder Al-Legierung den Precursor so gut benetzt, dass die Infiltrationsgeschwindigkeit größer als die Reaktionsgeschwindigkeit ist.

Der Einpressvorgang kann zeitlich unbegrenzt stattfinden, vorzugsweise wird das Al oder die Al-Legierung in 1 Sekunde bis 20 Minuten beim Pressguss und meist in weniger als 1 Sekunde (bevorzugt 1/1000 Sekunde bis 1 Sekunde) beim Druckguss in den Precursor eingepresst. Falls die gewünschte Reaktion nicht in ausreichendem Umfang beim Druckgussvorgang stattgefunden hat, kann das Konstruktionselement auch bis zur völligen Umsetzung (Reaktion) nachgeglüht werden. Bevorzugt wird die Glühbehandlung in inerter Atmosphäre, im Vakuum oder in der Luft zwischen 10 min und 24 h durchgeführt. Wesentlich ist, dass die Reaktion des Al mit der oder den reduzierbaren oxidischen Verbindungen im gewünschten Umfang bei der angewendeten Temperatur ablaufen kann und gegebenenfalls ein metallisches Stützgewebe nur unwesentlich beschädigt wird.

Die Glühbehandlung kann verkürzt werden, wenn man eine Nachbehandlung durchführt, bei welcher durch Reibung ein Nachglühen stattfindet. Dies eignet sich besonders für rotationssymmetrische Elemente, wie z.B. Scheibenbremsen.

Ein weiterer Gegenstand der vorliegenden Erfindung ist ein durch das oben beschriebene Verfahren erhältliches Konstruktionselement.

Ein nochmals weiterer Gegenstand der vorliegenden Erfindung ist ein Bauteil, welches ein wie vorstehend beschriebenes Konstruktionselement umfaßt. Wie für den Fachmann offensichtlich ist, ist es für die Erfindung nicht wesentlich, daß sich das Konstruktionselement durch das gesamte Bauteil hindurchzieht, sondern es ist möglich, das Konstruktionselement gezielt in denjenigen Bereichen einzusetzen, die bei der vorgesehenenen Verwendung hohen Belastungen ausgesetzt sind.

Außer für tribologische Anwendungen eignet sich der Aufbau und die Werkstoffkombination des beschriebenen Konstruktionselements für andere Anwendungen, bei denen Oberflächen besonderen Temperatur- und Korrosionsbeanspruchungen ausgesetzt sind, bei denen Al nicht mehr fest oder stabil ist oder bei denen die thermische Ausdehnung von Al zu hoch ist.

Unterschiedliche Anwendungen des erfindungsgemäßen Metall-keramischen Konstruktionselements sind beispielsweise Bremselemente, Lager, Führungselemente, Gleitschienen, Schleifkontakte etc., aber auch Heizelemente oder Kolbenböden, Zylinderlaufflächen, Zylinderköpfe, Nocken auf Nockenhebeln oder - wellen im Motorenbau.

Die Erfindung wird durch die Beispiele und die Figuren weiter erläutert.

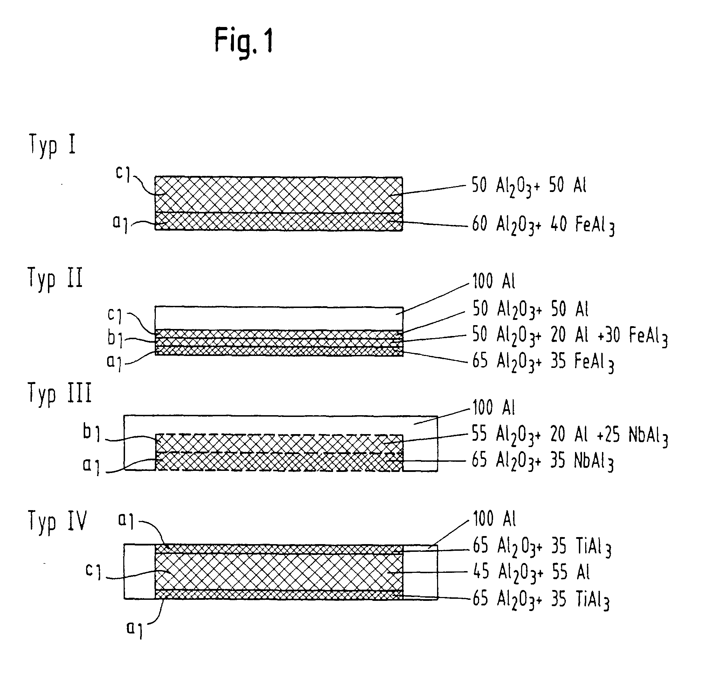

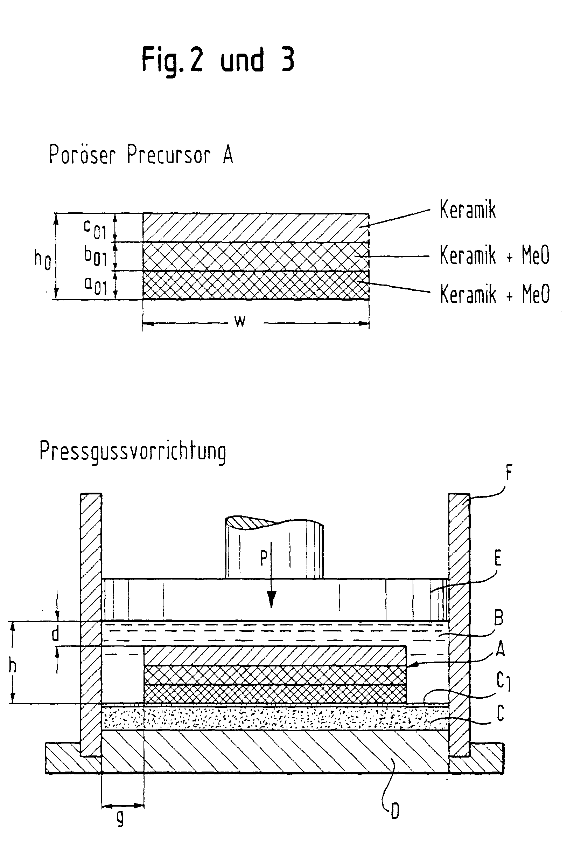

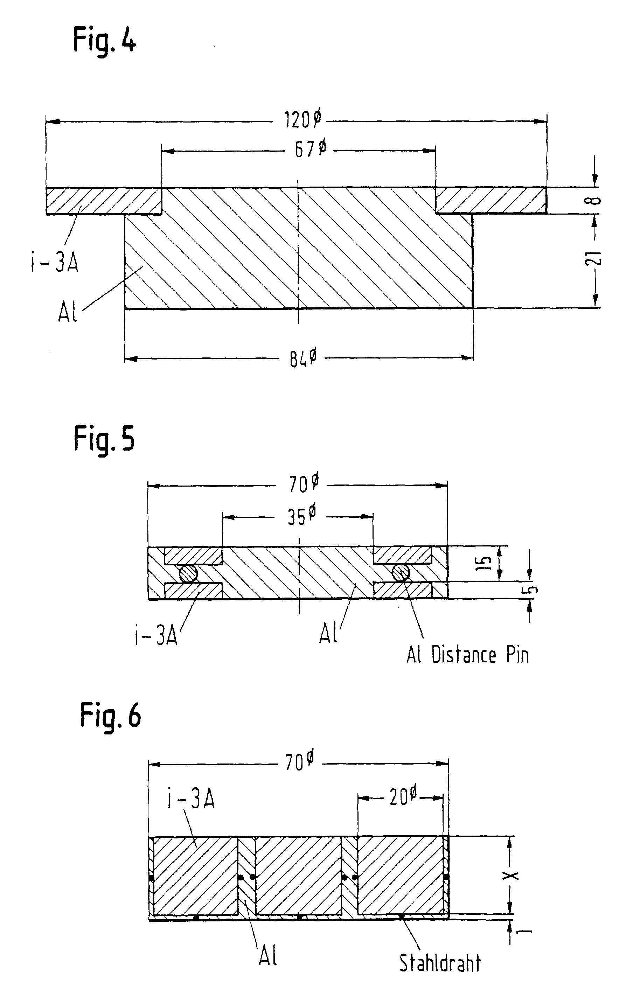

In Fig. 1 sind vier Typen von Ausführungsbeispielen beschrieben, Fig. 2 zeigt einen porösen Precursor A und Fig. 3 eine Pressgussvorrichtung mit eingebrachtem porösem Precursor A.

### Figurenbeschreibung

### Fig. 1

Typ I: Dieser Typ des Metall-keramischen tribologischen Elements besteht aus zwei Schichten a₁ und c₁. Schicht c₁ besteht aus 50 Vol.-% Al₂O₃ und 50 Vol.-% Aluminium. Schicht a₁ besteht aus 60 Vol.-% Al₂O₃ und 40 Vol.-% FeAl₃ (Aluminid).

Typ II: Die Schichten c₁, b₁ und a₁ sind mit dem Träger aus 100 % Aluminium (100 Al) verbunden. Schicht c₁ besteht aus 50 Vol.-% Al₂O₃ und 50 Vol.- % Aluminium, Schicht b₁ besteht aus 50 Vol.-% Al₂O₃, 20 Vol.-% Aluminium und 30 Vol.-% FeAl₃ (Aluminid), Schicht a₁ besteht aus 65 Vol.-% Al₂O₃ und 35 Vol.-% FeAl₃ (Aluminid).

Typ III: In diesem Metall-keramischen tribologischen Element sind die Schichten a₁ und b₁ von dem Träger, der aus 100 % Aluminium (100 Al) besteht, eingefasst. Schicht b₁ besteht aus 55 Vol.-% Al₂O₃, 20 Vol.-% Aluminium und 25 Vol.-% NbAl₃ (Aluminid). Schicht a₁ besteht aus 65 Vol.-% Al₂O₃ und 35 Vol.-% NbAl₃ (Aluminid).

Typ IV: In diesem Typ ist die Schicht C₁, die aus 45 Vol.-% Al₂O₃ und 55 Vol.-% Aluminium besteht, an beiden Seiten mit der Schicht a₁ verbunden, die jeweils aus 65 Vol.-% Al₂O₃ und 35 Vol.-% TiAl₃ (Aluminid) besteht. Diese beiden Schichten sind von einem Träger aus 100 % Aluminium (100 Al) eingefasst.

### Fig. 2 und 3:

- A:: poröser, überwiegend keramischer Precursor
- B:: Aluminium oder Al-Legierung
- C:: poröse Unterlage zur Luftaufnahme (z.B. aus nicht infiltrierbarem RBAO, optimal)
- C₁:: nicht benetzbare poröse Schicht (optimal)
- D:: Unterstempel
- E:: Oberstempel
- F:: Pressform (zylindrisch, rechteckig, etc.)
- a₀₁, a₀₂ ... a₀ᵢ:: poröse (20 bis 60 %) Keramikschicht aus Al₂O₃ und MeO, das vollständig zum Aluminid + Al₂O₃ reagiert und den Porenraum ausfüllt
- b₀₁, b₀₂ ... b₀ᵢ:: poröse Keramikschicht aus Al₂O₃ und MeO (MeO: reaktionsfähiges Metalloxid) und zusätzlichem Freiraum für Aluminium
- c₀₁, c₀₂ ... c₀ᵢ:: poröse Keramikschicht (Al₂O₃)
- a₁, a₂ ... aᵢ:: Keramik + Aluminid (Keramik: hier Al₂O₃)
- b₁, b₂ ... bᵢ:: Keramik + Al₂O₃ + Aluminid + Al
- c₁, c₂ ... cᵢ:: Keramik + Aluminium (Keramik: hier Al₂O₃)
- d:: Dicke der Al-Deckplatte (optimal)
- g:: Dicke der äußeren Ummantelung aus Aluminium (optimal)
- ho:: Höhe des porösen Precursors
- h:: Höhe des Triboelements
- w:: Durchmesser bzw. Seitenlänge des Triboelements

### Fig. 4:

Ringförmige Scheiben, wie in Beispiel 1 beschrieben

### Fig. 5:

Pressgussvorrichtung mit zwei Ringscheiben und Abstandshaltern aus Al in Schnittansicht

### Fig. 6:

Druckgussvorrichtung mit zylinderförmigen Precursorproben im Schnitt

### Fig. 7:

Photographie des gemäß Beispiel 5 hergestellten Pleuels, unbehandelt bzw. einseitig geschliffen

### Fig. 8:

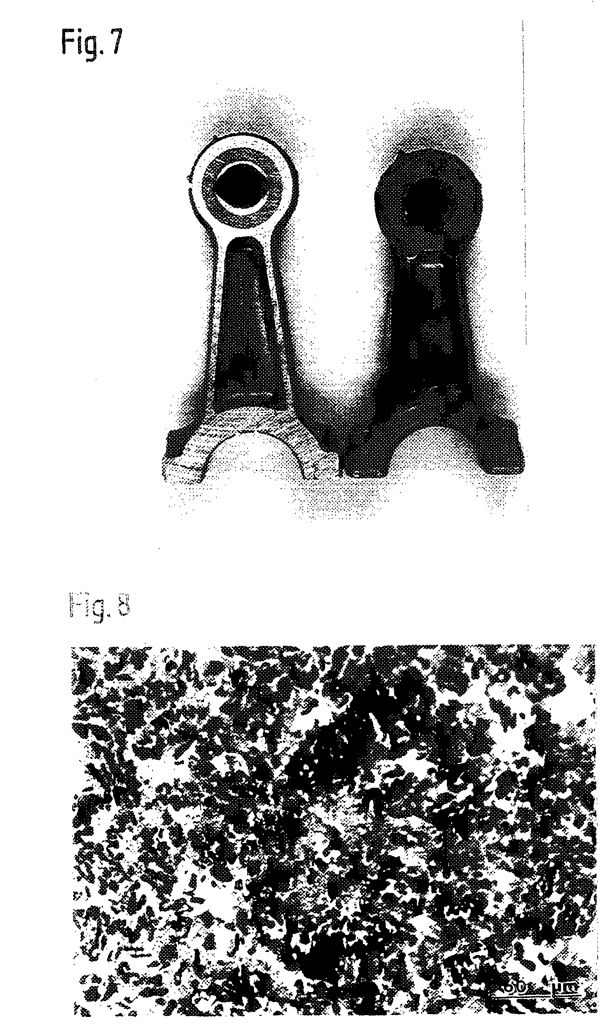

Gefügebild des Materials des Pleuels von Figur 7.

### Beispiele

### Ausführungsbeispiele für Al-infiltrierte Konstruktionselemente

Die Ausführungsbeispiele der Fig. 1 zeigen scheibenförmige, hauptsächlich für tribologische Anwendungen geeignete Konstruktionselemente. Die Durchmesser können zwischen 1 und 100 cm betragen. Mit a1 ist immer die belastete Oberflächenschicht bezeichnet und mit b, c etc. die Übergangsschichten zum Träger.

### Beispiele für die Herstellung eines Metall-keramischen Konstruktionselements

Ein poröser, überwiegend aus Keramik bestehender Precursor (A) wird in einer Pressgussdruckkammer (F) mit einem Innendurchmesser von 70 mm auf einen Unterstempel (D) aufgesetzt, wobei ein poröser Zwischenkörper (C), beispielsweise aus feinporigem (Porendurchmesser < 1 *µ*m) reaktionsgebundenem Al₂O₃ (RBAO) zur Luftaufnahme aus dem Precursor dazwischengelegt werden kann. Der Zwischenkörper (C) sollte von flüssigem Aluminium nicht infiltriert werden. Bei grobporigen Zwischenkörpern könnte eine nicht benetzbare poröse Schicht C₁ auf C aufgebracht werden. Anschließend wird flüssiges Al (B) über den Precursor (A) gegossen und mit dem Oberstempel (E) bei einem Druck von 50 MPa und einer Temperatur von 800°C in 2 Minuten in die Poren gedrückt. Während in den c₀-Schichten (c₀₁ - c₀ᵢ) die Keramik ohne Reaktion mit Al-infiltriert wird, werden die Schichten b₀ (b₀₁ - b₀ᵢ) und a₀ (a₀₁ - a₀ᵢ) so mit Al infiltriert, dass in b₀ das vorhandene reaktive Metalloxid (MeO) mit Al zu Al₂O₃ und dem entsprechenden Aluminid (MeAl) reagiert, aber noch unreagiertes Al übrigbleibt. In a₀ ist der gesamte Porenraum durch das refraktäre Aluminid-Reaktionsprodukt ausgefüllt. Die Indices 01, 02 ... 0i deuten an, dass entsprechend graduierte Schichten aufgebaut werden, wobei von der Al-Seite (Schicht c oberer Teil des Precursors) der Al-Gehalt abnimmt, in b und a der Aluminid-Gehalt bis zum nominalen Aluminiumgehalt im Oberflächenbereich der Schicht zunimmt.

Nach Abschluss des Pressgussvorgangs wird das erhaltene Metall-keramische Konstruktionselement aus der Anlage entnommen. Es sollte fast ohne Nacharbeitung einsatzfähig sein.

### Beispiel 1

200 g einer Pulvermischung aus 50 Vol-% Al₂O₃ (MPA 4, Ceralox Condea) und 50 Vol.% TiO₂(Riedel de-Ha n, Seelze) wurden 1 h in H₂O in einem Attritor mit 3Y-TZP-Mahlkugeln gemahlen. Aus dem Schlicker wurden ringförmige Scheiben (s. Fig 4) mit einem Innendurchmesser von 67 mm und einem Außendurchmesser von 120 mm und einer Höhe von 8 mm in Gipsformen gegossen und nach dem Trocknen an Luft bei 1250°C 20 min. gesintert. Danach betrug die offene Porosität 45 %. Diese auf 400°C vorgeheizten Precursoren wurden in einer Pressgussform mit einem Druck von 20 MPa und bei einer Temperatur von 750°C mit reinem Al (99,999 %) entsprechend Fig. 4 ca. 1 min. infiltriert. Danach enthielt das Konstruktionselement ca. 45 Vol.% Al₂O₃, ca. 25 Vol.% (TiAl₃ + Al) und ca. 30 Vol.% TiO₂. Nach einer Glühung bei 630°C im Vakuum für 10 h war kein TiO₂ mehr feststellbar. Dafür hatten sich die TiAl₃ Röntgenpeaks stark vergrößert.

### Beispiel 2

Eine Pulvermischung wie in Beispiel 1 wurde getrocknet und anschließend einachsig zu ringförmigen Scheiben mit Außen-/lnnendurchmesser von 60/35 mm und einer Höhe von 5 mm mit 40 MPa gepresst und bei 1250°C an Luft 10 min. vorgesintert. Danach betrug die Dichte 57 % TD. Zwei auf 600°C vorgeheizte Ringscheiben wurden anschließend in der Pressgussvorrichtung (Fig. 5) mit Abstandshaltern aus Al plaziert und bei einem Druck von 50 MPa und einer Temperatur von 800°C ca. 1 min. druckinfiltriert (s.a. Fig. 5). Das TiO₂ war danach in einem großen Teil zu einem i-3A-Material umgesetzt.

### Beispiel 3

In gleicher Weise wie in Beispiel 1 wurden Precursorenmischungen zusätzlich mit einem TiO₂/Al₂O₃-Volumenverhältnis von 70/30 und 30/70 sowie aus reinem TiO₂ hergestellt und nach dem Trocknen zu Zylindern mit 20 mm Durchmesser und Höhen zwischen 2 und 20 mm einachsig mit 50 MPa gepresst und bei Temperaturen zwischen 1100 und 1300°C vorgesintert. Die Dichten der Precursoren betrugen danach zwischen 54 und 70 % TD, wobei keine geschlossene Porosität festzustellen war. Jeweils 5 bis 6 auf 400°C vorgeheizte Proben wurden mit 1 mm Stahldraht in der Vorrichtung aus Beispiel 2 (s.a. Fig. 6) plaziert und bei Temperaturen zwischen 700 und 800°C mit 50 MPa druckinfiltriert. Danach waren die meisten Proben vollständig infiltriert. Proben mit einem TiO₂/Al₂O₃-Verhältnis von 30/70 enthielten außen Al₂O₃, TiO₂ und TiAl₃ zusätzlich Al, während solche mit einem TiO₂/Al₂O₃-Verhältnis von 70/30 zusätzlich TiAl enthielten. Die reine TiO₂-Probe war ebenfalls teilweise zu Al₂O₃ und TiAl₃ reagiert, allerdings war sie von vielen Rissen durchzogen, wobei die ursprünglichen Abmessungen des Zylinders stark zugenommen hatten. Die Dimensionsänderung der anderen Proben betrug jeweils < 1 %. Eine 6-stündige Glühung bei 630°C im Vakuum führte zum Verschwinden der restlichen TiO₂-Röntgenreflexe.

### Beispiel 4

Gleiche Versuchsserien wie in Beispiel 3 wurden auch mit Fe₂O₃-Al₂O₃ sowie Nb₂O₅-Al₂O₃-Precursormischungen durchgeführt, wobei allerdings die Höhe der Zylinder mit 5 mm sowie die Vorsintertemperatur auf 1250°C (20 min.) konstant gehalten wurde. Die Ergebnisse zeigten, dass Fe₂O₃ nahezu völlig zu Al₂O₃ + FeAl₃ ( + Al) umgesetzt wurde, während Nb₂O₅ nur unvollständig mit Al reagierte.

Daraus ist abzuleiten, dsas entweder Fe₂O₃ als Beschleuniger zugesetzt oder aber nachgeglüht werden muss.

### Beispiel 5

Pulvermischungen aus 70 Vol.% Al₂O₃ (Gilox) und 30 Vol.% TiO₂ wurden wie in Beispiel 1 attritiert, getrocknet und isostatisch zu Hohlzylindern mit Innen-/Außendurchmessern 17/26 mm und Höhen zwischen 15 und 20 mm bei 100 MPa gepresst und bei 1250°C 20 min. an Luft gesintert. Danach betrug die Dichte 57 % TD. Diese Precursoren wurden auf 950°C vorgeheizt und danach in einer 20°C warmen Pleuel-Druckgussform im Bereich des Pleuellagers plaziert. Anschließend wurde die Form seitlich mit Anschnittsgeschwindigkeiten von 27 bis 38 m/s mit einem Druck von 140 MPa (Metalldruck am Kolben) bei 750°C mit einer Si-haltigen Al-Legierung innerhalb von weniger als 1 s gefüllt (Die angenommene Infiltrationszeit dürfte dabei ca. 1/10 s betragen, wobei die Schmelztemperatur auf unter 700°C abgesunken sein dürfte). Danach enthielt der Hohlzylinder im Lagerbereich [siehe Fig. 7, Foto des Pleuels vor (rechts) und nach (links) einer einseitigen Schleifbehandlung] ca. 40 Vol.% Al₂O₃, ca. 40 Vol.% (TiAl₃ + Al) und ca. 20 Vol.% TiO₂. Siehe auch Gefügebild in Fig.8. Dunkel: Al₂O₃ und TiO₂, grau: TiAl₃, hell: Al.

### Beispiel 6

40 Vol.-% Al₂O₃ (Gilox) und 60 Vol.-% Ilmenit (TiFeO₃, CSIRO Clayton, Australien) wurden 10 min in Wasser wie in Beispiel 1 gemischt und getrocknet. Anschließend wurde das Pulver wie in Beispiel 5 zu einem 15 mm hohen Zylinder mit Innen/Außendurchmesser von 17/26 mm isostatisch bei 600 Mpa gepresst, wobei sich im Zentrum ein doppellagiges Stahldrahtgewebe bestehend aus einem Gewebe mit einem Drahtdurchmesser von 0,063 mm und einer Maschenweite von 0,1 mm gestützt von einem gröberen Drahtgewebe mit Durchmesser von 0,56 mm und Maschenweite von 2 mm (Gekuplate 150 mesh/10 mesh, Fa. GKD, Düren) befand. Danach wurde wie in Beispiel 5 verfahren. Das Drahtgewebe war anschließend fast völlig erhalten, selbst der 0,063 mm Draht war nur oberflächlich von Al angelöst. Der Drahtkörper, der ca. 20 Vol.-% des Zylinders ausmachte, war von ca. 55 Vol.-% (Al₂O₃ + Restilmenit) und ca. 40 Vol.-% Al und bisher noch nicht identifizierter FeTi-Aluminidphasen umgeben. Allerdings waren Al-gefüllte Risse in dem Teil des Zylinders zu erkennen, in dem kein Drahtgewebe vorhanden war. Offensichtlich war der Grünkörper beim Druckgussvorgang zum Teil zerstört worden.

### Beispiel 7

Wie in Beispiel 6 wurde ein dreischichtiges Stahldrahtgewebe (Durchmesser 0,1 mm, Maschenweite 0,16 mm, Fa. GKD, Düren) in einen Grünkörper aus 30 Vol.- % TiO₂, 15 Vol.-% Fe₂O₃ und 55 Vol.-% Al₂O₃ (1 Stunde in Wasser attritiert) isostatisch eingebracht. Dieser so verstärkte Grünkörper wurde 1 Stunde bei 1150°C vorgesintert und anschließend wie in Beispiel 5 druckinfiltriert. Das Drahtgewebe war danach fast völlig erhalten und der gesamte i-3A-Körper (Lager des Pleuels) war ohne Risse.

### Beispiel 8

Feines (∼ 1 *µ*m) Nb₂O₅-Pulver (Johnson Matthey, Karlsruhe, 1 h in Wasser mit TZP-Kugeln attritiert) wurde mit einem Stahlstempel 43 mm im Durchmesser in einen oben offenen Al-Topf mit 1 mm Wandstärke und einem Außendurchmesser von 45 mm und einer Höhe von 5 mm eingepresst, sodass die Gründichte ca. 55 % TD betrug. Der so gefüllte Topf wurde in einen Al₂O₃-Tiegel mit 60 mm Innendurchmesser gestellt und anschließend mit reinem Al bei 800°C 10 min mit einem Argon-Druck von 12 MPa druckinfiltriert. Danach entstand ein zylinderförmiges Al-Element, das im Zentrum eine 43 mm breite und 4 mm dicke Oberflächenschicht aus ca. 45 Vol.% Al₂O₃ und ca. 55 Vol.% NbAl₃ enthielt. D.h. die Precursorform hatte mit Hilfe des stabilisierenden Al-Topfs den Pressvorgang ohne Formänderung überstanden.

## Patentansprüche

1. Verfahren zur Herstellung eines Metall-keramischen Konstruktionselements, in dem man in einer Druck- oder Pressguss-Vorrichtung in einen offenporigen keramischen Vorkörper (Precursor), der die poröse Vorform mindestens der Oberflächenschicht aufweist und mindestens eine von Al reduzierbare oxidische Verbindung mit auf den dichten Werkstoff bezogenen Volumenanteilen von 10 bis 100 % und Al₂O₃ mit 0 bis 90 % sowie gegebenenfalls weitere nichtoxidische Verbindungen oder Elemente sowie gegebenenfalls metallische Verstärkungselemente enthält und der gegebenenfalls mit einem Träger verbunden ist, flüssiges Al oder Al-Legierung einpresst, wobei die oxidische Verbindung Beschleuniger in Form eines exotherm stärker aktiven Oxids, ausgewählt aus FeO, Fe₂O₃, Fe₃O₄, NiO oder MoO₃ oder Gemischen derselben in einer Menge von 10 bis 50 Vol.-%, bezogen auf die von Al reduzierbare oxidische Verbindung enthält und die Reaktion zwischen Al und dem Metalloxid in das entsprechende Aluminid und Al₂O₃ bewirkt, bis sich mindestens eine Al₂O₃-haltige Oberflächenschicht, die von einer vorwiegend aus Aluminiden bestehenden Al-Phase durchzogen ist, und gegebenenfalls eine oder mehrere damit verbundene Übergangsschichten bildet.

2. Verfahren nach Anspruch 1,
**dadurch gekennzeichnet,**
das die von Al reduzierbare oxidische Verbindung mindestens eine Verbindung aus der Gruppe Cr₂O₃, CuO, Cu₂O, CoO, Co₂O₃, FeO, Fe₂O₃, Fe₃O₄, HfO₂, Li₂O, MnO, MgO, MoO₃, Na₂O, Nb₂O, Nb₂O₅, NiO, SiO₂, TiO, TiO₂, V₂O₅, WO₃, Y₂O₃, ZrO₂, Mullite, Spinelle, Zirkonate, Titanate sowie Fe-, Ti-, Co-, Ni-, Zr-, Si-, Nb-haltige Erze, insbesondere Zirkon (ZrSiO₄) oder Ilmenit (FeTiO₃) enthält.

3. Verfahren nach Anspruch 1 oder 2,
**dadurch gekennzeichnet,**
**dass** der Precursor auf 200 °C bis 700 °C vorgeheizt wird.

4. Verfahren nach einem der Ansprüche 1 bis 3,
**dadurch gekennzeichnet,**
**dass** das Al oder die Al-Legierung bei einer Temperatur von 600 °C bis 1200 °C eingepresst wird.

5. Verfahren nach einem der Ansprüche 1 bis 4,
**dadurch gekennzeichnet,**
**dass** das Al oder die Al-Legierung mit einem Druck von 1 bis 200 MPa eingepresst wird.

6. Verfahren nach einem der Ansprüche 1 bis 5,
**dadurch gekennzeichnet,**
**dass** das Al oder die Al-Legierung in weniger als 20 Minuten eingepresst wird.

7. Verfahren nach einem der Ansprüche 1 bis 6,
**dadurch gekennzeichnet,**
**dass** das Konstruktionselement nachgeglüht wird.

8. Verfahren nach einem der Ansprüche 1 bis 7,
**dadurch gekennzeichnet,**
**dass** man den keramischen Vorkörper, der zu 20 bis 55 % offene Poren mit Durchmessern zwischen 0,1 und 10 *µ*m enthält, nach konventionellen keramischen Verfahren formt.

9. Verfahren nach einem der Ansprüche 1 bis 8,
**dadurch gekennzeichnet,**
**dass** man den keramischen Vorkörper durch eine mindestens teilweise offene metallische Stützform stabilisiert.

10. Verfahren nach einem der Ansprüche 8 und 9,
**dadurch gekennzeichnet,**
**dass** man den Vorkörper bildet durch Formen eines Gemisches von Keramikpulver und einem faserförmigen Material und Entfernen des faserförmigen Materials vor der Infiltration mit Al oder Al-Legierung.

11. Verfahren nach Anspruch 10,
**dadurch gekennzeichnet,**
**dass** das faserförmige Material durch Thermolyse entfernt wird.

12. Verfahren nach einem der Ansprüche 1 bis 11,
**dadurch gekennzeichnet,**
**dass** man den keramischen Vorkörper bei Temperaturen zwischen 900 °C und 1300 °C sintert.

13. Verfahren nach Anspruch 1,
**dadurch gekennzeichnet,**
**dass** die Vorformen der Übergangsschichten weniger Metalloxid und mehr Al₂O₃ enthalten als die Oberflächenvorform, wobei die mit dem Träger zu verbindende Übergangsschicht nur noch Al₂O₃ enthält.

14. Verfahren nach einem der Ansprüche 1 bis 13,
**dadurch gekennzeichnet,**
**dass** das Konstruktionselement, insbesondere bei rotationssymmetrischer Form, zur Vervollständigung der Reaktion durch Reibung nachgeglüht wird.

## Claims

1. A method of preparing a metal-ceramic structural component, in which, in a pressure die casting or squeeze casting device, liquid Al or Al alloy is pressed into an open porous ceramic preform body (precursor) which exhibits the porous preform of at least the surface layer and contains at least one oxidic compound reducible by Al with volume contents of 10 to 100 % in relation to the dense material and Al₂O₃ with 0 to 90 % and, optionally, also further non-oxidic compounds or elements as well as, optionally, metallic reinforcing elements, and which is optionally combined with a carrier, wherein the oxidic compound contains accelerators in the form of an exothermically more powerfully active oxide, selected from FeO, Fe₂O₃, Fe₃O₄, NiO or MoO₃ or mixtures thereof in a quantity of 10 to 50 % by volume, in relation to the oxidic compound reducible by Al, and induces the reaction between Al and the metal oxide into the corresponding aluminide and Al₂O₃ up to at least one surface layer containing Al₂O₃, which is permeated by an Al-phase consisting predominantly of aluminides, and optionally forms one or more transitional layers combined therewith.

2. Method according to Claim 1, **characterised in that** the oxidic compound reducible by Al contains at least one compound from the group Cr₂O₃, CuO, Cu₂O, CoO, Co₂O₃, FeO, Fe₂O₃, Fe₃O₄, HfO₂, Li₂O, MnO, MgO, MoO₃, Na₂O, Nb₂O, Nb₂O₅, NiO, SiO₂, TiO, TiO₂ V₂O₅, WO₃, Y₂O₃, ZrO₂, mullites, spinels, zirconates, titanates, as well as Fe, Ti, Co, Ni, Zr, Si, Nb containing ores, especially zircon (ZrSiO₄) or ilmenite (FeTiO₃).

3. Method according to either Claim 1 or 2, **characterised in that** the preform is preheated to 200 to 700°C.

4. Method according to any one of Claims 1 to 3, **characterised in that** Al or Al alloy is pressure cast at a temperature of 600 to 1200°C.

5. Method according to any one of Claims 1 to 4, **characterised in that** Al or Al alloy is pressure cast at a pressure of 1 to 200 MPa.

6. Method according to any one of Claims 1 to 5, **characterised in that** Al or Al alloy is pressure cast within less than 20 minutes.

7. Method according to any one of Claims 1 to 6, **characterised in that** the structural component is post annealed.

8. Method according to any one of Claims 1 to 7, **characterised in that** the ceramic preform, which contains between 20 and 55% open pores with diameters of between 0.1 and 10 µm, is formed according to conventional ceramic techniques.

9. Method according to any one of the Claims 1 to 8, **characterised in that** ceramic preform is stabilised by an at least partially open metallic supporting structure.

10. Method according to one of Claims 8 and 9, **characterised in that** the preform is made by forming a mixture of ceramic powder and a fibrous material and by removing the fibrous material before infiltrating with Al or Al alloy.

11. Method according to Claim 10, **characterised in that** the fibrous material is removed by thermolysis.

12. Method according to any one of Claims 1 to 11, **characterised in that** the ceramic preform is sintered at temperatures of between 900 an 1300°C.

13. Method according to Claim 1, **characterised in that** the preforms of the transitional layers contain less metal oxide and more Al₂O₃ than the surface preform, wherein the transitional layer to be combined with the carrier only contains Al₂O₃.

14. Method according to Claims 1 to 13, **characterised in that** the structural component, especially when in rotationally symmetric form, is post annealed by friction in order to complete the reaction.

## Revendications

1. Procédé pour la fabrication d'un élément de construction en cermet dans lequel on injecte de l'Al liquide ou un alliage d'AI dans un dispositif de compression ou de moulage par injection dans un précurseur céramique à alvéoles ouvertes qui présente la préforme poreuse d'au moins la couche de surface et qui contient au moins un composé oxydant réductible par Al selon, sur la base du matériau dense, des fractions en volume comprises entre 10 et 100 % et Al₂O₃ selon 0 à 90 % ainsi qu'éventuellement d'autres composés ou éléments non oxydants ainsi que le cas échéant des éléments de renforcement métalliques et qui est éventuellement lié avec un support, où le composé oxydant contenant un accélérateur sous la forme d'un oxyde exothermique assez fortement actif, choisi parmi FeO, Fe₂O₃, Fe₂O₄, NiO ou MoO₃ ou des mélanges de ceux-ci dans une quantité comprise entre 10 et 50 % en volume, sur la base du composé oxydant réductible par Al, et où la réaction entre Al et l'oxyde métallique donne l'aluminure correspondant et Al₂O₃ jusqu'à ce qu'il se forme au moins une couche de surface contenant Al₂O₃ laquelle est traversée par une phase Al essentiellement composée d'aluminures, et éventuellement une ou plusieurs couches de transition qui y sont reliées.

2. Procédé selon la revendication 1
**caractérisé en ce que**
le composé oxydant réductible par Al contient au moins un composé du groupe Cr₂O₃, CuO, Cu₂O, CoO, Co₂O₃, FeO, Fe₂O₃, Fe₃O₄, HfO₂, Li₂O, MnO, MgO, MoO₃, Na₂O, Nb₂O, Nb₂O₅, NiO, SiO₂, TiO, TiO₂, V₂O₅, WO₃, Y₂O₃, ZrO₃, mullites, spinelles, zirconates, titanates, ainsi que des minerais contenant Fe, Ti, Co, Ni, Si, Zr ou Nb en particulier le zircon (ZrSiO₄) ou l'ilménite (FeTiO₃).

3. Procédé selon la revendication 1 ou 2
**caractérisé en ce que**
le précurseur est préchauffé à une température allant de 200 °C à 700 °C.

4. Procédé selon l'une des revendications 1 à 3
**caractérisé en ce que**
l'Al ou l'alliage Al est injecté à une température comprise entre 600 °C et 1 200 °C.

5. Procédé selon l'une des revendications 1 à 4
**caractérisé en ce que**
l'Al ou l'alliage Al est injecté à une pression comprise entre 1 et 200 MPa.

6. Procédé selon l'une des revendications 1 à 5
**caractérisé en ce que**
l'Al ou l'alliage Al est injecté en moins de 20 minutes.

7. Procédé selon l'une des revendications 1 à 6
**caractérisé en ce que**
l'élément de construction est recuit.

8. Procédé selon l'une des revendications 1 à 7
**caractérisé en ce que**
l'on forme le précurseur céramique qui contient des alvéoles ouvertes d'un diamètre compris entre 0,1 et 10 µm selon un procédé céramique conventionnel.

9. Procédé selon l'une des revendications 1 à 8
**caractérisé en ce que**
l'on stabilise le précurseur céramique par une forme de support métallique au moins partiellement ouverte.

10. Procédé selon l'une des revendications 8 et 9
**caractérisé en ce que**
l'on constitue le précurseur par la formation d'un mélange de poudre céramique et d'un matériau de forme fibreuse et par l'élimination du matériau de forme fibreuse avant l'infiltration avec Al ou l'alliage Al.

11. Procédé selon la revendication 10
**caractérisé en ce que**
le matériau de forme fibreuse est éliminé par thermolyse.

12. Procédé selon l'une des revendications 1 à 11
**caractérisé en ce que**
l'on vitrifie le précurseur céramique à des températures comprises entre 900 °C et 1 300 °C.

13. Procédé selon la revendication 1
**caractérisé en ce que**
les préformes des couches de transition contiennent moins d'oxydes métalliques et plus d'Al₂O₃ que le précurseur de surface, où la couche de transition à lier avec le support ne contient plus que Al₂O₃.

14. Procédé selon l'une des revendications 1 à 13
**caractérisé en ce que**
l'élément de construction, en particulier dans le cas d'une forme à symétrie de révolution, est recuit par friction pour assurer une réaction complète.
